# EUROPEAN PATENT APPLICATION

(11) **EP 2 498 530 A1**
(43) Date of publication of application: **12.09.2012**
(21) Application number: 11157692.2
(22) Date of filing: 10.03.2011
(51) Int. Cl.: H04W 24/02, H04W 92/20, H04W 92/04, H04W 72/04, H04B 7/02

(54) **Method for coordinated multipoint (CoMP) transmission/reception in wireless communication networks with reconfiguration capability**

(71) Applicant: NTT DoCoMo, Inc., Chiyoda-ku Tokyo 100-6150 (JP)
(72) Inventor: Choi, Changsoon, 80665, Munich (DE); Scalia, Luca, 81371, Munich (DE); Biermann, Thorsten, 85764, Oberschleißheim (DE); Mizuta, Shinji, 81667 Munich (DE)
(74) Representative: Zimmermann, Tankred Klaus

(57) **Abstract**

A method for coordinated multipoint communication in a wireless communication network is described. The wireless communication network has a plurality of base stations and a backhaul network connecting the plurality of base stations. The method includes selecting (S302) one or more cooperating base stations for a coordinated multipoint communication for a mobile unit serviced by a serving base station, determining (S310) whether the backhaul network supports a coordinated multipoint technique selected for a cooperating base station, and in case the backhaul network is not sufficient to support a coordinated multi-point technique for one or more of the cooperating base stations, reconfiguring (S312) the backhaul network to meet the requirements of the coordinated multipoint technique.

## Description

Embodiments of the invention relate to a method for a coordinated multi-point communication in a wireless communication network, to a wireless communication system, to a base station, and to a network controller. More specifically, embodiments relate to coordinated multi-point communication in a wireless communication system or network comprising a plurality of base stations and a backhaul network connecting the plurality of base stations.

Coordinated multi-point (CoMP) techniques provide an improved user throughput in LTE-Advanced (LTE = Long Term Evolution). Several base stations (BSs) jointly serve one or more user elements or user equipments (UEs), which allows for a more efficient management of inter-cell interferences and higher multiplexing gain of MIMO systems (MIMO = Multiple Input Multiple Output) by increasing the virtual number of antennas. To maximize the performance gain of CoMP it is necessary to find and select cooperating base stations which are capable of joining the CoMP technique in the radio layer which may also be called a "clustering procedure". This may be done by detecting base stations within the range of the user equipments so that radio parameters, such as the reference signal received quality (RSRQ) and channel state information (CSI) are commonly used.

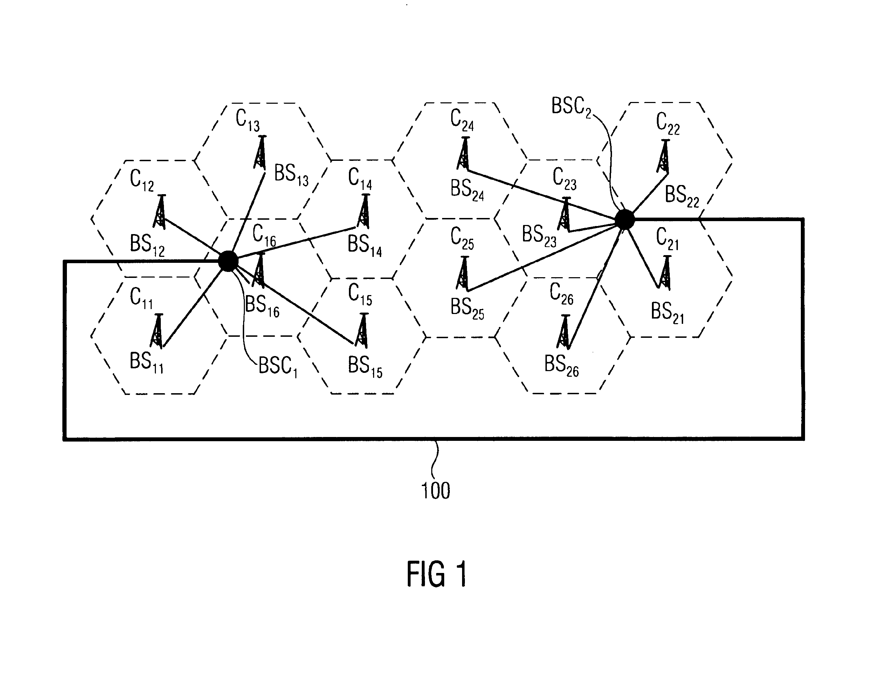

Fig. 1 is a schematic representation of a wireless communication network comprising a plurality of base stations serving a specific area (cell) around them. The wireless communication system or mobile cellular network shown in Fig. 1 comprises a first set of base stations BS₁₁ to BS₁₆ and a second set of base stations BS₂₁ to BS₂₆. The network further comprises respective base station controllers BSC₁ and BSC₂. The base stations BS₁₁ to BS₁₆ are coupled via a first backhaul network, for example via a WDM-PON (Wavelength Division Multiplexing Passive Optical Network) to the first base station controller BSC₁. Likewise, the base stations BS₂₁ to BS₂₆ are coupled via a second backhaul network to the second base station controller BSC₂. In Fig. 1, the backhaul network is schematically shown by lines connecting the respective base stations with the respective base station controller. Further, Fig. 1 schematically depicts the respective cells C₁₁ to C₁₆ and C₂₁ to C₂₆ as served by the respective base stations. Further, a core network 100 is schematically shown which connects the respective base station controllers BSC₁ and BSC₂ and also provides access to further networks.

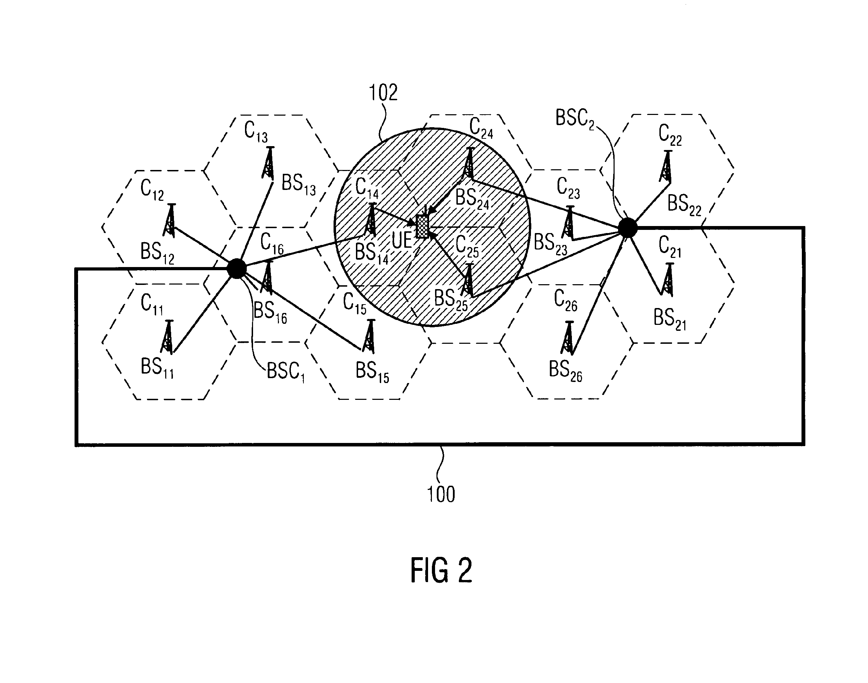

When considering a coordinated multi-point technique it is necessary to also consider the backhaul network properties, such as available capacity and latency for the clustering procedure, because the CoMP technique needs to share information and/or user data with other base stations through the backhaul network. So far, in conventional approaches using a CoMP clustering procedure such backhaul network properties have not been seriously considered and in most cases ideal backhaul networks have been assumed. In reality, however, backhaul networks or parts thereof for a communication between two base stations may not be able to support a CoMP technique due to a limited capacity and large latency. This situation is depicted in Fig. 2 showing the network of Fig. 1 with a user equipment UE that is to be served using a coordinated multi-point technique.

In Fig. 2, the user equipment UE, for example a mobile communication device, is at the border between cells C₁₄ and C₂₅ and may be served by multiple base stations BS₁₄, BS₂₄ and BS₂₅ that are within radio range of the user equipment UE. These base stations may participate in a coordinated multi-point technique for serving the user equipment UE as is depicted by the arrows and form a desired "wireless cluster" 102. However, due to the following constraints, the desired wireless cluster 102 will not be possible. As already mentioned, a coordinated multi-point technique for serving the user equipment UE requires to share information and/or user data among the base stations. In the situation depicted in Fig. 2, the base station BS₁₄ is coupled via a first backhaul network to the first base station controller BSC₁. The base stations BS₂₄ and BS₂₅ are coupled via the second backhaul network to the second base station controller BSC₂. The coordinated multi-point technique requires the exchange of respective information and/or data between the base station BS₁₄ and the base stations BS₂₄ and BS₂₅. However, the information/data needs to be transmitted via the base station controllers BSC₁ and BSC₂ and via the core network 100 so that the required capacity and/or latency may not be given and the base stations BS₂₄ and BS₂₅ will not be available for serving the user equipment UE using a coordinated multi-point technique despite the fact that same are within radio range of the user equipment UE. Thus, the base stations which are possible candidates for joining the CoMP in the radio layers, namely base stations BS₂₄ and BS₂₅, cannot contribute to any performance gain due to the limited backhaul network capability. Thus, the desired wireless cluster 102 shown in Fig. 2 is not feasible due to the non-optimally configured backhaul networks associated with the base stations BS₂₄ and BS₂₅. Therefore, the actually available active cluster is smaller than the desired wireless cluster 102 due to these backhaul limitations.

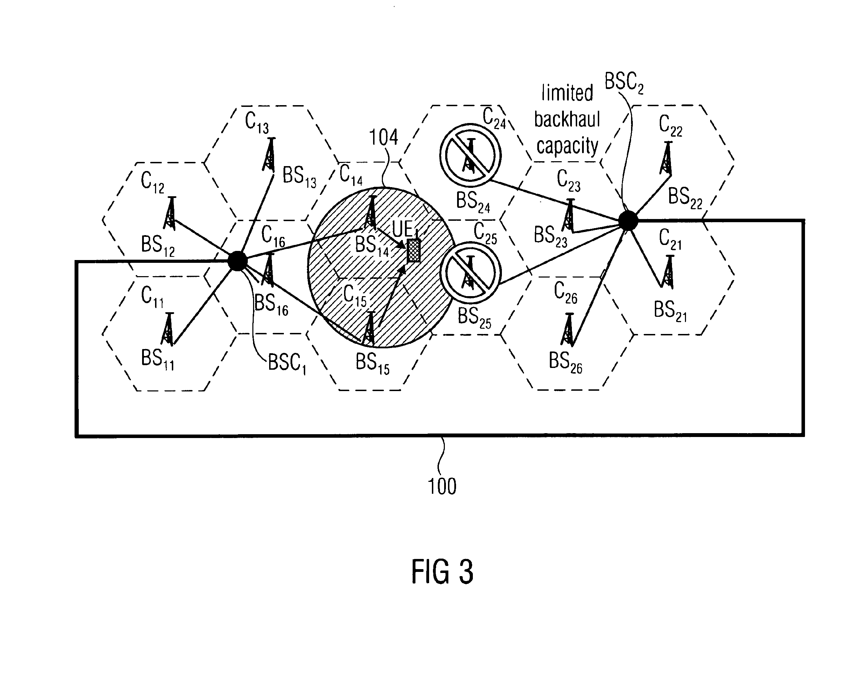

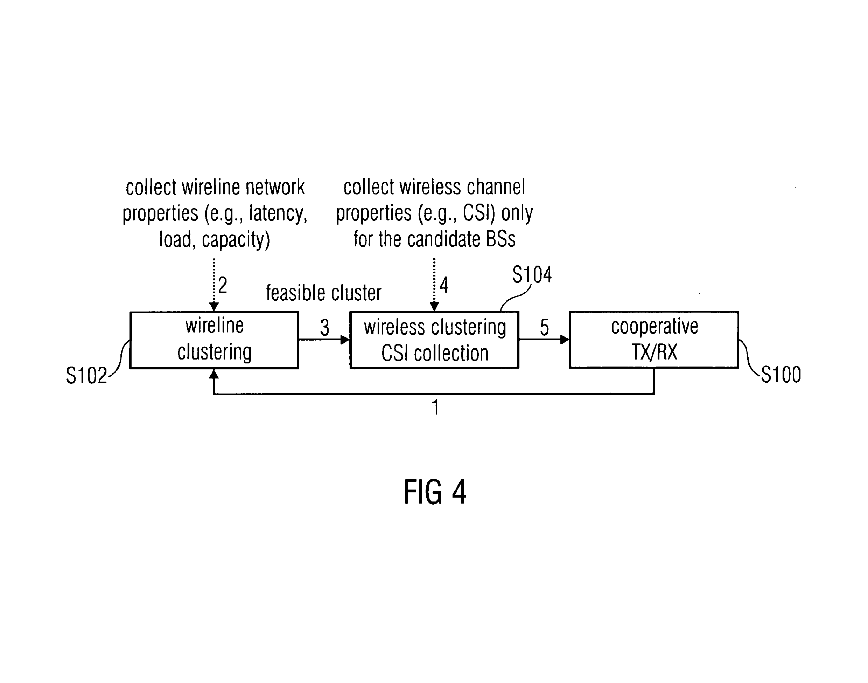

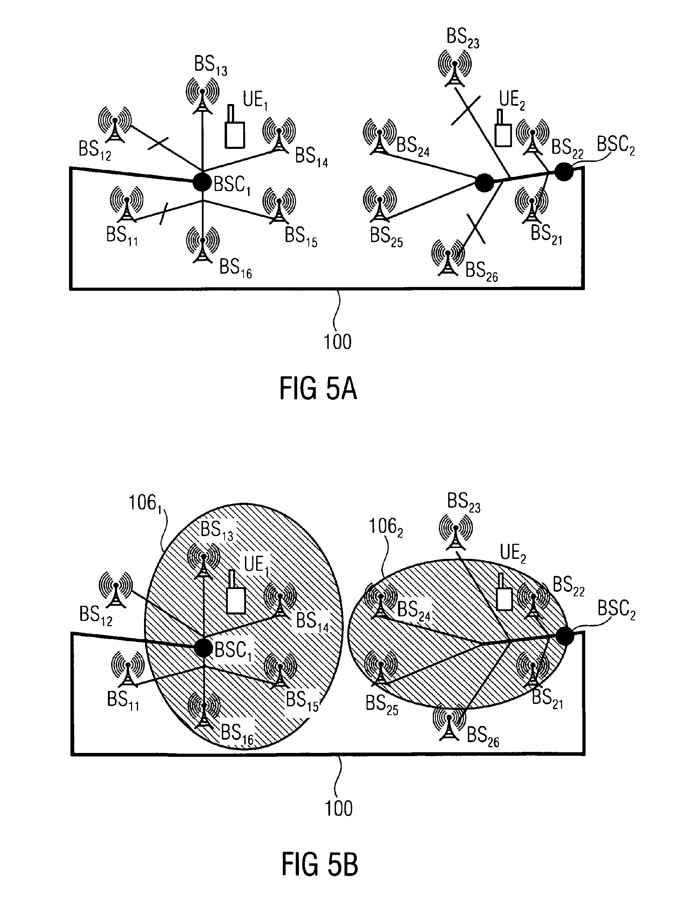

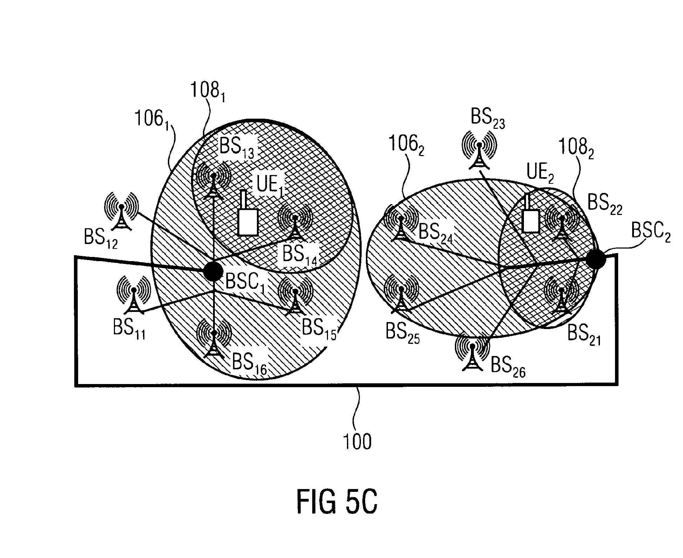

Fig. 3 depicts an earlier solution for minimizing the problem that certain base stations which are selected to join CoMP actually cannot contribute to the performance gain due to the limited backhaul network capability. In accordance with the earlier solution, instead of base stations BS₂₄ and BS₂₅ shown in Fig. 2, the active cluster also comprises base station BS₁₅ for serving user equipment UE. This earlier solution is a clustering procedure which only takes into account the backhaul network properties to exclude such base stations which do not provide for sufficient backhaul network properties for allowing implementation for CoMP techniques. This earlier approach of doing a wireline clustering first will be explained in further detail with regard to Figs. 4 and 5. Fig. 4 shows a block diagram illustrating the respective actions taken in accordance with this earlier approach, while Fig. 5 illustrates the resulting clusters on the basis of the network shown in Fig. 1. Fig. 5 does not show the respective cells, but only the respective base stations. Further, the wireline clustering for a CoMP technique serving for two user equipments UE₁ and UE₂ is shown, wherein the first user equipment UE₁ is to be served by the base stations coupled to the first base station controller BSC₁, and the second user equipment UE₂ is to be served by the base stations connected to the second base station controller BSC₂ via the second backhaul network.

In a first step S100 the transmission/reception properties between the user equipments UE₁ and UE₂, respectively, and all the base stations BS₁₁ to BS₁₆ and BS₂₁ to BS₂₆, respectively, are determined. In a subsequent step S102 the wireline clustering is done on the basis of the collected wireline network properties, namely properties of the backhaul network connecting the respective base stations for serving user equipments UE₁ and UE₂, respectively. The properties may for example comprise a latency, and/or a capacity of the backhaul network, more specifically of a communication link between the respective base stations serving a user equipment. On the basis of this information it is determined in step S102 that the backhaul network portion associated with base stations BS₁₁ and BS₁₂ does not provide for sufficient network properties that allow for information/data exchange among the base stations with a rate that is required and sufficient for using a CoMP technique. Also for base stations BS₂₃ and BS₂₆ it is determined that the backhaul network does not provide for sufficient network properties allowing for the base stations to join the CoMP for serving user equipment UE₂. This is depicted in Fig. 5(a) with a small crossbar through the line connecting the base stations BS₁₁, BS₁₂, BS₂₂ and BS₂₆ with the respective base station controller BSC₁ and BSC₂, respectively. On the basis of this information, step S102 defines the feasible clusters 106₁ and 106₂ including those base stations that, in view of the sufficient network properties of the associated backhaul network, may join the CoMP for serving the respective user equipments UE₁ and UE₂. As can be seen, those base stations determined to not have sufficient backhaul network properties are not part of the respective feasible clusters 106₁ and 106₂. In a subsequent step S104 from the feasible clusters 106₁ and 106₂ the wireless clustering is executed determining on the basis of wireless channel properties for the candidate base stations being part of the feasible clusters 106₁ and 106₂ those which may serve the user equipment in accordance with the selected CoMP technique. This may be done on the basis of the channel state information (CSI) obtained for each channel between a candidate base station BS₁₃ to BS₁₆ and the user equipment UE₁. The output of step S104 yields the wireless clusters 108₁ and 108₂ depicted in Fig. 5(c) including from the feasible clusters those base stations BS₁₃, BS₁₄ and BS₂₁, BS₂₂, BS₂₄, BS₂₅, respectively, that fulfill the necessary wireless channel properties required for the selected CoMP technique for serving user equipments UE₁ and UE₂, respectively.

As can be seen from Figs. 3 to 5, the conventional and the earlier approaches cannot promise a maximum CoMP performance, because only a small number of cooperating base stations may join the CoMP as a result of the above described network-pre-clustering or wireline clustering. A further disadvantage of this earlier approach is that network clustering requires a large amount of signaling since it is required to ask all neighboring base stations without knowledge which of the base stations actually may join the CoMP in radio layer.

It is an object underlying the invention to provide an improved approach for coordinated multi-point communication in a wireless communication network increasing the CoMP performance for serving a user equipment.

This object is achieved by a method according to claim 1, a wireless communication system according to claim 13, a base station according to claim 15, and a network controller according to claim 16.

Embodiments of the invention provide a method for coordinated multipoint communication in a wireless communication network comprising a plurality of base stations and a backhaul network connecting the plurality of base stations, the method comprising:
selecting one or more cooperating base stations for a coordinated multipoint communication for a user equipment serviced by a serving base station;
determining whether the backhaul network supports a coordinated multipoint technique selected for a cooperating base station; and
in case the backhaul network is not sufficient to support a coordinated multipoint technique for one or more of the cooperating base stations, reconfiguring the backhaul network to meet the requirements of the coordinated multipoint technique.

In accordance with an embodiment, reconfiguring the backhaul network may comprises reconfiguring or activating network components according to the requirement of the coordinated multipoint technique, reconfiguring the backhaul network, for example an physical X2 link, a dynamic bandwidth allocation in TDM-PONs, an optical tunneling link and a microwave point-to-point link between base stations.

In accordance with an embodiment, the method may further comprise determining whether the reconfigured backhaul network supports the coordinated multipoint technique for the cooperating base stations, and starting the coordinated multipoint communication, when the reconfigured backhaul network supports the coordinated multipoint technique.

In accordance with an embodiment, determining whether the backhaul network supports a coordinated multipoint technique comprises determining whether the backhaul network provides sufficient network properties for a communication between the serving base station and a selected cooperating base station in accordance with the selected coordinated multipoint technique, wherein the network properties may comprise a network capacity and a network latency.

In accordance with an embodiment, the selected coordinated multipoint technique comprises joint processing, coordinated scheduling, and coordinated beamforming.

A cooperating base station may send information about the available physical resource blocks for a communication between the cooperating base station and the mobile unit and information about the backhaul network properties for a communication between the cooperating base station and the serving base station via the backhaul network to the serving base station.

In accordance with an embodiment, selecting one or more cooperating base stations may comprise determining by the mobile unit a signal quality with respect to one or more neighboring base stations, reporting the signal quality to the serving base station, and selecting by the serving base station the cooperating base station based on the signal quality, wherein selecting may comprise transmitting a scheduling request via the backhaul network from the serving base station to the one or more neighboring base stations.

Embodiments of the invention provide a wireless communication system, comprising:
a plurality of base stations; and
a backhaul network connecting the plurality of base stations;
wherein a mobile unit is serviced by a serving base station of the plurality of base stations, and
wherein the system is configured to
select one or more cooperating base stations for a coordinated multipoint communication for a mobile unit serviced by the serving base station,
determine whether the backhaul network supports a coordinated multipoint technique selected for a cooperating base station, and
cause a reconfiguration of the backhaul network to meet the requirements of the coordinated multipoint technique, in case the backhaul network is not sufficient to support a coordinated multipoint technique for one or more of the cooperating base stations.

In accordance with an embodiment, the serving base station and/or a network controller of the wireless communication system may be configured to select the one or more cooperating base stations, to determine whether the backhaul network supports a coordinated multipoint technique, and to cause the reconfiguration of the backhaul network.

Embodiments of the invention provide a base station for a wireless communication system, the wireless communication system comprising a plurality of base stations and a backhaul network connecting the plurality of base stations,
wherein the base station is configured to service a mobile unit, and
wherein the base station is configured to
select one or more cooperating base stations for a coordinated multipoint communication for a mobile unit serviced by the base station,
determine whether the backhaul network supports a coordinated multipoint technique selected for a cooperating base station, and
cause a reconfiguration of the backhaul network to meet the requirements of the coordinated multipoint technique, in case the backhaul network is not sufficient to support a coordinated multipoint technique for one or more of the cooperating base stations.

Embodiments of the invention provide a network controller for a wireless communication system, the wireless communication system comprising a plurality of base stations and a backhaul network connecting the plurality of base stations, wherein one of the base stations is configured to service a mobile unit, and wherein a coordinated multipoint communication for the mobile unit using one or more cooperating base stations is to be implemented, wherein the network controller is configured to cause a reconfiguration of the backhaul network to meet the requirements of the coordinated multipoint technique, in case the backhaul network is not sufficient to support a coordinated multipoint technique selected for one or more of the cooperating base stations.

In accordance with an embodiment, the serving base station and/or the network controller is configured to select one or more cooperating base stations for a coordinated multipoint communication for a mobile unit serviced by the serving base station, and determine whether the backhaul network supports a coordinated multipoint technique selected for a cooperating base station.

In accordance with embodiments of the invention, the number of base stations that may join the CoMP increases and the more base stations join the CoMP, the higher the performance gain will be from the CoMP. From this point of view, in accordance with embodiments the number of cooperating base stations having an influence on user equipments in the radio layers is maximized.

Thus, embodiments of the invention provide a further development in a wireless communication network allowing and/or enhancing the possibilities of using coordinated multi-point (CoMP) communication with a mobile unit serviced by a serving base station. Earlier approaches used the so-called backhaul network pre-clustering that was carried out prior to any wireless clustering. While this approach avoided the use of base stations in the CoMP procedure that did not fulfill the necessary requirements and therefore would have led to a degradation of the CoMP performance, still the possible maximum CoMP performance was reduced in view of the reduced number of available cooperating base stations that were allowed to join the CoMP communication. In accordance with embodiments the wireless clustering is carried out prior to network pre-clustering, in other words wireless clustering is done first followed by network clustering and then the network may be reconfigured in case the backhaul network determined for supporting the CoMP procedure does not provide for sufficient properties, for example for a sufficient network capacity or network latency, for fulfilling the requirements of a CoMP selected for a cooperating base station.

In accordance with embodiments of the invention, during the wireless clustering phase, first of all, on the basis of the measurement of the signal quality of communication channels between a mobile unit and neighboring base stations the serving base station determines possible cooperating base stations. A scheduling request is transmitted via the backhaul network and the possible cooperating base stations return respective information about their resources available for communication with a mobile network and the properties of a possible communication between the serving base station and the cooperating base stations via the backhaul network. On the basis of this information concerning the wireless communication between a base station and the user equipment, the CoMP technique used for each cooperating base station may be determined. Then, the network properties are checked to find out as to whether the backhaul network is in a position to support the selected coordinated multi-point technique for the respective cooperating base stations. In case this is not true, in accordance with embodiments a reconfiguration of the network is done, for example by activating additional elements or network components, like an optical tunneling link between the serving base station and one or more of the cooperating base stations. For example, such measures might be taken in case it turns out that the connection between the serving base station and the cooperating base station via the backhaul has to pass multiple hops, thereby encountering an excessive multi-hop delay resulting in an increased latency which is not suitable for supporting the selected CoMP technique. The optical tunnel link may also be provided in case it turns out that a network latency for transmitting the data for the CoMP technique selected is not sufficient. A further network component that may be used is a wireless point-to-point backhaul link, for example a microwave link between the serving base station and the cooperating base station.

In the context of LTE-Advanced applications coordinated multi-point transmission/reception techniques are discussed due to their potential to provide higher user throughput by the cooperation of multiple base stations. The performance strongly depends on the capacity, latency and other features of the mobile backhaul network and different CoMP techniques have different requirements for the mobile backhaul network. In order for the network architecture to fully support the different CoMP techniques, embodiments of the invention teach a network reconfiguration that enables activating or deactivating network components according to the network requirements of a CoMP technique. This allows for a sufficient capacity and latency for a CoMP technique if required, and therefore allows a CoMP technique to be fully supported, which in turn, results in an improved user throughput. Also, higher energy efficiency in the network management may be expected, because not all CoMP techniques require both high capacity and low latency and because the network can adapt itself according to a selected CoMP technique. Thus, embodiments of the invention are advantageous as they allow for an increased user throughput by fully supported CoMP techniques through a network reconfiguration. A further advantage is that a more efficient backhaul network management is implemented for supporting different CoMP techniques having different network requirements.

Thus, embodiments of the invention avoid the prior art problems and the problems of earlier solutions by using a network reconfiguration for the CoMP and by providing a corresponding CoMP procedure that enables a network reconfiguration. When a network realizes difficulties to fulfill CoMP requirements, network components can be reconfigured or activated according to this requirement which minimizes the problems caused by limited network capabilities, however, maximizes the number of cooperating base stations that may join the CoMP which will result in an improved CoMP performance gain, which eventually leads to a UE throughput enhancement.

Embodiments of the invention will be described with respect to the accompanying drawings, in which:
- Fig. 1: is a schematic representation of a wireless communication network compris-ing a plurality of base stations serving a specific area (cell);
- Fig. 2: shows the network of Fig. 1 with a user equipment UE that is to be served using a coordinated multi-point technique, wherein a desired wireless clus-ter is indicated in the figure;
- Fig. 3: shows the network of Fig. 2 indicating an active cluster that is achievable by earlier approaches;
- Fig. 4: shows a block diagram illustrating an earlier approach for implementing a coordinated multi-point technique;
- Fig. 5(a)-(c): illustrates, on the basis of the network shown in Fig. 1, the resulting clusters obtained when applying the approach of Fig. 4;
- Fig. 6: shows a flow diagram for a coordinated multi-point technique in accordance with an embodiment of the invention;
- Fig. 7(a)-(f): depicts, on the basis of the network of Fig. 5, the resulting clusters obtained when applying the approach of Fig. 6; and
- Fig. 8: shows a CoMP procedure in accordance with an embodiment of the inven-tion.

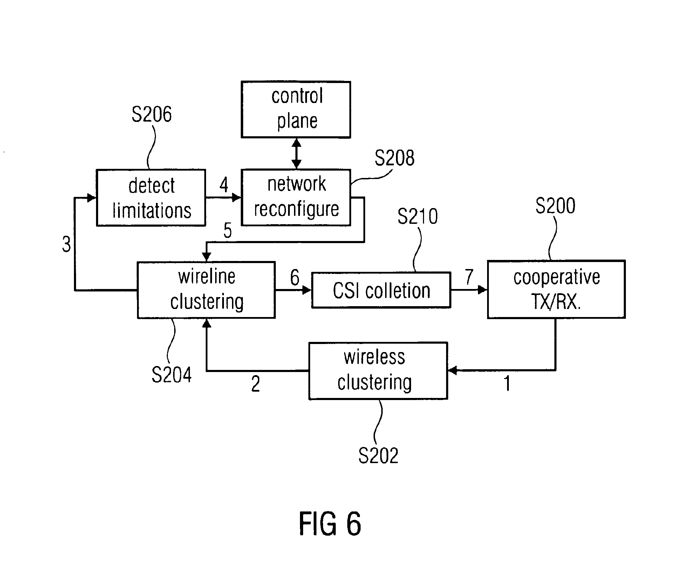

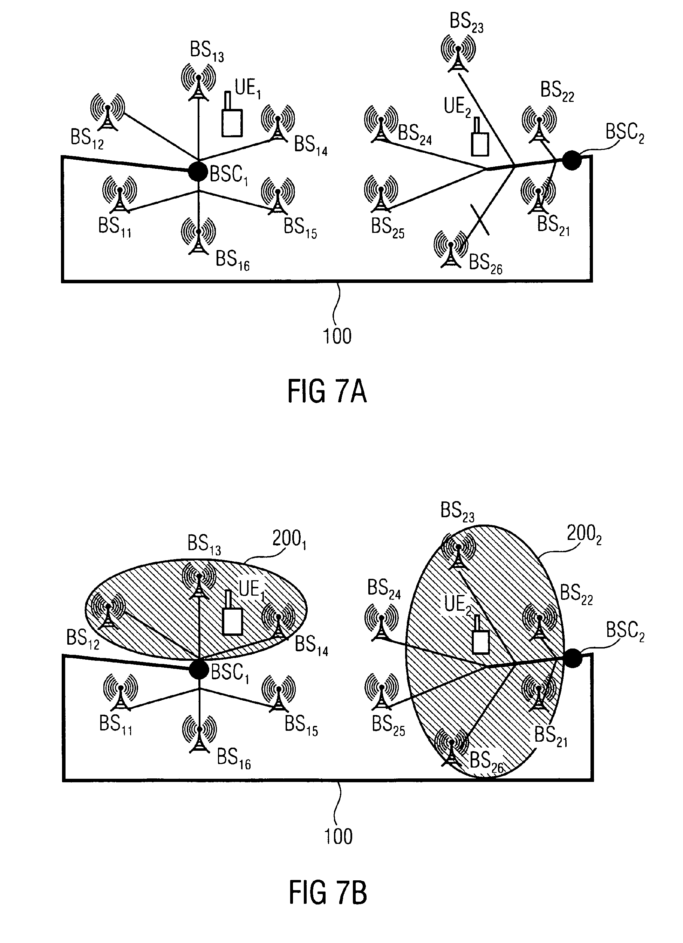

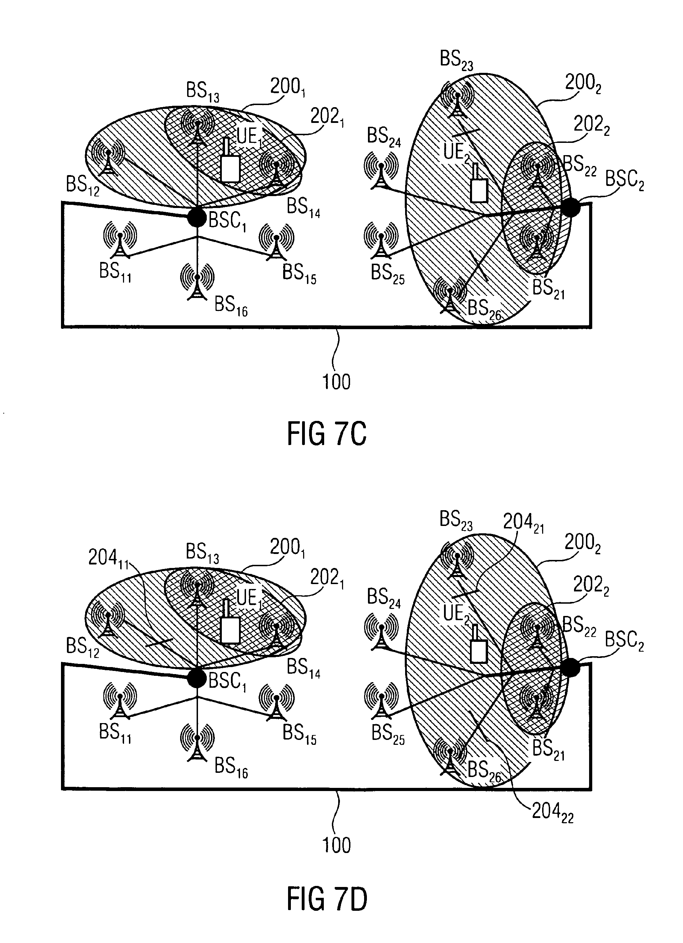

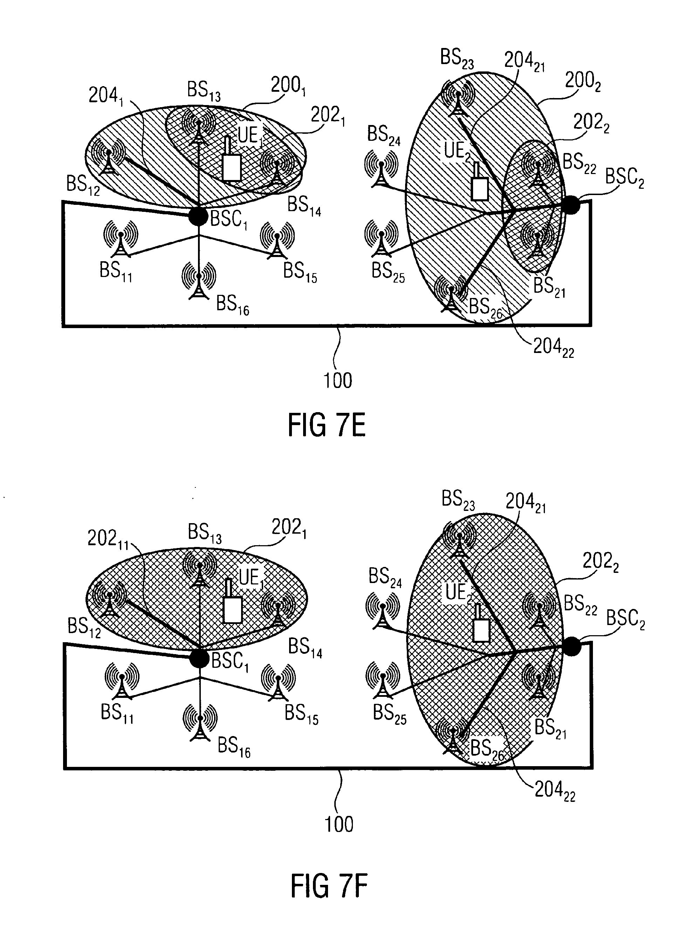

With regard to Figs. 6 and 7 an embodiment of the invention is described. More specifically, a wireless clustering preceding a wireline clustering plus a network reconfiguration is described.

Fig. 6 shows a flow diagram indicating the respective steps carried out in accordance with this embodiment, and Fig. 7 depicts, on the basis of a network of Fig. 5, the clustering process for serving two user equipments UE₁ and UE₂ in accordance with a CoMP technique. At step S200 the transmission/reception properties between the user equipments UE₁ and UE₂, respectively, are determined. On the basis of the wireless properties for example, RSRQ or signal-to-interference noise ratio (SINR) the wireless clustering is done in step S202 yielding the wireless clusters 200₁ and 200₂ including the base stations providing sufficient wireless channel properties for serving the user equipment UE₁ and UE₂, respectively. With other words, one or more cooperating base stations for a coordinated multi-point communication for a mobile unit serviced by a serving base station are selected. As can be seen from Fig. 7(b) for serving user equipment UE₁, the possible base stations are base stations BS₁₂ to BS₁₄, and for serving user equipment UE₂, the possible base stations are base stations BS₂₁ to BS₂₃, and BS₂₆. The wireless clustering in step S202 comprises for example collecting the wireless channel properties, i.e. the properties between the respective base stations and the user equipment and selecting those base stations for the wireless cluster that fulfill respective requirements regarding the wireless channel properties. After the wireless clustering the wireline clustering occurs in step S204. On the basis of the wireline network properties, more specifically on the basis of the network properties collected for the backhaul networks connecting the respective base stations selected during wireless clustering, the wireline clustering is done. For example, the latency and the capacity of the backhaul network for allowing a communication among the base stations directly via the backhaul network are determined. In the example described with regard to Figs. 6 and 7 it is determined that for serving the user equipment UE₁ using a CoMP technique the backhaul network does not provide for sufficient properties for allowing a communication of base station BS₁₂ with the other base stations of the wireless cluster 200₁. With other words, it is determined whether the backhaul network supports a coordinated multipoint technique selected for a cooperating base station. Likewise, it is determined that the backhaul network for communication between base stations BS₂₃ and BS₂₆ does not provide for sufficient properties for communicating with the other base stations BS₂₁ and BS₂₂ for implementing a CoMP technique for serving user equipment UE₂. Therefore, wireline clustering at step S204 results in the selection of the wireline clusters 202₁ and 202₂ only including base stations BS₁₃, BS₁₄ and BS₂₁ and BS₂₂, respectively, as is shown in Fig. 7(c).

Following the wireline clustering, in accordance with embodiments of the invention, the limitations of those base stations that were originally within the wireless cluster but were deselected from the wireline cluster are detected. In Fig. 7(d) the portions of the backhaul network for which the limitations are detected are indicated by reference signs 204₁₁, 204₂₁ and 204₂₂. In a subsequent step S208 the backhaul network is reconfigured, more specifically a reconfiguration of the backhaul network on the basis of information provided by a control plane (as shall be discussed in further detail below), thereby removing the limitations from connections 204₁₁, 204₂₁ and 204₂₂ as is depicted in Fig. 7(e). With other words, in case the backhaul network is not sufficient to support a coordinated multipoint technique for one or more of the cooperating base stations, the backhaul network is reconfigured to meet the requirements of the coordinated multipoint technique. On the basis of the reconfigured network, the wireline clustering in step S204 can be repeated. In view of the reconfiguration also the portions 204₁₁, 204₂₁ and 204₂₂ now have the required properties, so that repeating the wireline clustering step S204 results in the wireline clusters 202₁ and 202₂ shown in Fig. 7(f), now including for user equipment UE₁ all base stations of the original wireless cluster 200₁, and for the user equipment UE₂ all base stations of the original wireless cluster 200₂. Thus, while the earlier approach provided a system that was able to predict a cluster feasibility but could not improve it, embodiments of the invention as described above are also able to improve cluster feasibility. In other words, contrary to the earlier approaches the number of base stations, due to the reconfiguration of the backhaul network, can now be increased so that the CoMP performance can be further increased.

The above referenced network reconfiguration described with regard to Step S208 in Fig. 6 is achieved by exploiting the flexibility of backhaul networks, and embodiments of the invention provide for the first CoMP system architecture having such a functionality. Examples for the network's flexibility are the provision of an physical X2 links, a dynamic bandwidth allocation in TDM-PONs (passive optical networks.

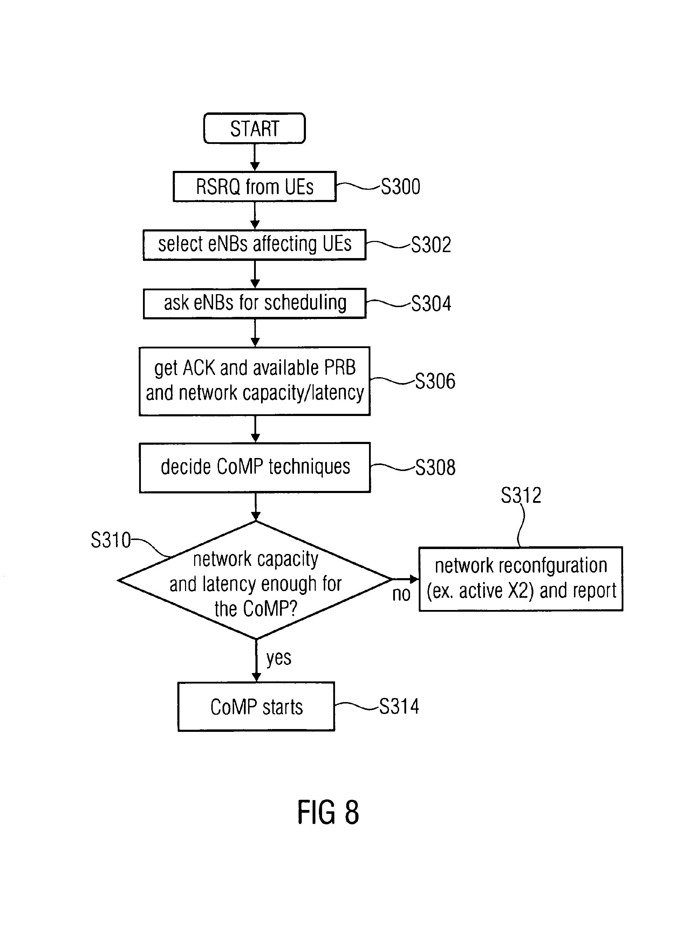

On the basis of Fig. 8 a CoMP procedure in accordance with an embodiments of the invention is described in further detail. In order to maximize the number of cooperating base stations for CoMP up to the number of base stations that wireless clustering decides to include (see Figs. 6 and 7), embodiments of the invention use network reconfigurations for CoMP. When the network resources are not sufficient for cooperating base stations, the backhaul network can be reconfigured to make it suitable for CoMP. There are different kinds of network reconfiguration that one can design and implement in mobile backhaul networks, for example L1 layer optical tunneling or L1 layer microwave wireless point-to-point links between base stations. Not all CoMP techniques require both high capacity and low latency, so that the above mentioned network components may only need to be activated dependent on the specifics of the CoMP request defining the specific techniques to be implemented. This is particularly beneficial for energy efficient network management and, in addition, the increase of numbers of base stations also results in a performance enhancement of the CoMP.

Fig. 8 shows a flow chart of the CoMP procedure in accordance with embodiments of the invention. In general, a cell-edge UE measures RSRQ with respect to neighboring base stations and reports it to a serving base station for mobility purposes, for example for a handover, as is shown at step S300 in Fig. 8 indicating the provision of the RSRQ to the base station from the respective user equipments. At step S302 the serving base station uses this reported data to select a set of cooperating base stations that effect the user equipment in the radio layer. As is indicated in step S304 the serving base stations sends out a scheduling message and a subband index to the cooperating base stations. In case the cooperating base stations succeed in scheduling and finding available physical resource blocks (PRB) that the user equipments are currently using, the respective base stations send a "yes" back to the serving base station together with their cell identification in an acknowledgement message. If not, which means that the respective cooperating base station fails to schedule PRBs, it sends a "no" in the acknowledgement message together with its cell ID. At the same time, the base stations report the backhaul network properties including the available capacity and latency with respect to a possible communication to the serving base station. At step S306 the serving base station receives the acknowledgement messages, the available PRBs and the network capacity and latency information from the possible cooperating base stations and decides at step S308 on the basis of this information about the CoMP techniques for each cooperating base station based on the availability of PRBs and the required user equipment throughput. A cooperating base station having available PRB can join either coordinated scheduling or joint processing. In case no PRB is available in a cooperating base station, it may join CoMP with coordinated beamforming. Once the CoMP techniques for the respective cooperating base stations are decided, the serving base station determines whether the provided network capabilities are sufficient to support a CoMP technique selected for the respective base stations. For example, coordinated scheduling only requires the exchange of scheduling information, so that it is hardly affected by the available network capacity and latency. On the other hand, joint processing needs to exchange both user data and channel state information and therefore imposes a large burden on the backhaul network traffic. In case it turns out that the backhaul network is not sufficient to support a CoMP technique (see step S310), a network controller or a cooperating base station may be requested to reconfigure the network architecture, as is indicated in step S312 to meet the requirements for the CoMP. After completing the reconfiguration or activation of additional network components, the controller or the cooperating base station returns the acknowledgment message to the serving base station and it is determined as to whether the refined network has sufficient network capability for the CoMP. In case the requirements are fulfilled, the CoMP starts at step S314.

Embodiments of the invention provide for an improved CoMP performance resulting, in turn, in an improved user throughput. More specifically, CoMP performance gain is strongly affected by the backhaul network capabilities since the CoMP requires the exchange of user data and/or cell information. If a cooperating base station does not have sufficient network capability, it will degrade the overall performance gain of the CoMP or cannot even join the CoMP. The network reconfiguration described above is a solution that minimizes the just mentioned problems in backhaul networks and optimizes backhaul networks according to the selected CoMP technique. Using this technique allows more cooperating base stations to join the CoMP resulting in a performance enhancement of the CoMP.

A further advantage is that energy efficient networks may be implemented. To be more specific, different CoMP techniques require different backhaul network capabilities. For example, as mentioned above, joint processing needs high capacity and low latency in the backhaul networks since both user data and channel information are shared among the cooperating base stations through the backhaul network. Coordinated beamforming imposes less burden on networks than joint processing, because only channel state information is shared. However, it is still important to have low latency in the network. The CoMP technique that results in the smallest burden is coordinated scheduling which only needs to share scheduling information. It would not be efficient to provide a large network capability for a coordinated beamforming approach that only leads to shared channel state information. In order to support different CoMP techniques more efficiently, the reconfigurable network in accordance with embodiments of the invention provides substantial advantages over fixed networks. Embodiments of the invention actually allow the efficient use of network resources.

A further advantage of embodiments of the invention is that a faster processing is obtained by a reduced signaling overhead. The above described earlier approach using network clustering before wireless clustering to include network capabilities for the clustering procedure needed to check network properties for all neighboring base stations without knowledge which of the base stations actually will join the CoMP in the radio layer. This resulted in unnecessary signaling between the base stations which are out of the radio range or the user equipment. Embodiments of the invention are advantageous as they provide for the wireless clustering first to check cooperating base station candidates and therefore eliminates the signal problems resulting from network clustering prior to wireless clustering.

In case it is determined that no reconfiguration of the backhaul network is possible or that there is no reconfiguration available allowing for the required CoMP properties, no CoMP communication is implemented or a reduced CoMP communication is implemented using the available base stations.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed. Generally, embodiments of the invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the method is, therefore, a computer program having a program code for performing one of the methods described herein, when the computer program runs on a computer.

A further embodiment of the method is, therefore, a data carrier (or a digital storage medium, or a computer-readable medium) comprising, recorded thereon, the computer program for performing one of the methods described herein. A further embodiment of the method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method for coordinated multipoint communication in a wireless communication network comprising a plurality of base stations (BS, 300, 304, 306) and a backhaul network connecting the plurality of base stations (BS, 300, 304, 306), the method comprising:
selecting (S200, S300-S308, 308) one or more cooperating base stations (306a-c) for a coordinated multipoint communication for a mobile unit (UE, 302) serviced by a serving base station (300);
determining (S204, S310, 316) whether the backhaul network supports a coordinated multipoint technique selected for a cooperating base station (306a-c); and
in case the backhaul network is not sufficient to support a coordinated multipoint technique for one or more of the cooperating base stations (306a-c), reconfiguring (S208, S312, 318) the backhaul network to meet the requirements of the coordinated multipoint technique.

2. The method of claim 1, wherein reconfiguring (S208, S312, 318) the backhaul network comprises reconfiguring or activating network components according to the requirement of the coordinated multipoint technique, for example a physical X2 link, a dynamic bandwidth allocation in TDM-PONs, an optical tunneling link and a microwave point-to-point link between base stations..

3. The method of claim 1 or 2, comprising:
determining whether the reconfigured backhaul network supports the coordinated multipoint technique for the cooperating base stations (306a-c), and
starting (S314, 322-326c) the coordinated multipoint communication, when the reconfigured backhaul network supports the coordinated multipoint technique.

4. The method of one of claims 1 to 3, wherein determining whether the backhaul network supports a coordinated multipoint technique comprises determining whether the backhaul network provides sufficient network properties for a communication between the serving base station (300) and a selected cooperating base station (306a-c) in accordance with the selected coordinated multipoint technique.

5. The method of claim 4, wherein the network properties comprise a network capacity and a network latency.

6. The method of one of claims 1 to 5, wherein the selected coordinated multipoint technique comprises joint processing, coordinated scheduling, and coordinated beamforming.

7. The method of one of claims 1 to 6, wherein the serving base station (300) selects the coordinated multipoint technique for a cooperating base station based on the throughput demanded by the mobile unit (UE, 302) and based on the physical resource blocks available at a the cooperating base station (306a-c) for a communication between the cooperating base station (306a-c) and the mobile unit (UE, 302).

8. The method of claim 7, wherein a cooperating base station (306a-c) sends information about the available physical resource blocks for a communication between the cooperating base station and the mobile unit, and information about the backhaul network properties for a communication between the cooperating base station (306a-c) and the serving base station (300) via the backhaul network to the serving base station.

9. The method of one of claims 1 to 8, wherein selecting one or more cooperating base stations (306a-c) comprises:
determining by the mobile unit (302) a signal quality with respect to one or more neighboring base stations,
reporting (301) the signal quality to the serving base station (300), and
selecting by the serving base station (300) the cooperating base stations (306a-c) based on the signal quality.

10. The method of claim 9, wherein selecting comprises broadcasting (310a-c) a scheduling request via the backhaul network from the serving base station (300) to the one or more neighboring base stations (304).

11. A wireless communication system, comprising:
a plurality of base stations (BS, 300, 304, 306); and
a backhaul network connecting the plurality of base stations (BS, 300, 304, 306);
wherein a mobile unit (UE, 302) is serviced by a serving base station (300) of the plurality of base stations, and
wherein the system is configured to
select (S200, S300-S308, 308) one or more cooperating base stations (306a-c) for a coordinated multipoint communication for a mobile unit (302) serviced by the serving base station (300),
determine (S204, S310, 316) whether the backhaul network supports a coordinated multipoint technique selected for a cooperating base station (306a-c), and cause (S208, S312, 318) a reconfiguration of the backhaul network to meet the requirements of the coordinated multipoint technique, in case the backhaul network is not sufficient to support a coordinated multipoint technique for one or more of the cooperating base stations (306a-c).

12. The wireless communication system of claim 11, wherein the serving base station (300) and/or a network controller (BSC₁, BSC₂) of the wireless communication system are configured to select the one or more cooperating base stations (306a-c), to determine whether the backhaul network supports a coordinated multipoint technique, and to cause the reconfiguration of the backhaul network.

13. A base station for a wireless communication system, the wireless communication system comprising a plurality of base stations (BS, 300, 304, 306) and a backhaul network connecting the plurality of base stations (BS, 300, 304, 306),
wherein the base station (300) is configured to service a mobile unit (302), and wherein the base station (300) is configured to
select (S200, S300-S308, 308) one or more cooperating base stations (306a-c) for a coordinated multipoint communication for a mobile unit (302) serviced by the base station (300),
determine (S204, S310, 316) whether the backhaul network supports a coordinated multipoint technique selected for a cooperating base station (306a-c), and cause (S208, S312, 318) a reconfiguration of the backhaul network to meet the requirements of the coordinated multipoint technique, in case the backhaul network is not sufficient to support a coordinated multipoint technique for one or more of the cooperating base stations (306a-c).

14. A network controller for a wireless communication system, the wireless communication system comprising a plurality of base stations (BS, 300, 304, 306) and a backhaul network connecting the plurality of base stations (BS, 300, 304, 306), wherein one of the base stations (300) is configured to service a mobile unit (302), and wherein a coordinated multipoint communication for the mobile unit using one or more cooperating base stations (306a-c) is to be implemented,
wherein the network controller (BSC₁, BSC₂) is configured to cause (S208, S312, 318) a reconfiguration of the backhaul network to meet the requirements of the coordinated multipoint technique, in case the backhaul network is not sufficient to support a coordinated multipoint technique selected for one or more of the cooperating base stations (306a-c).

15. The network controller of claim 14, wherein the serving base station (300) and/or the network controller (BSC₁, BSC₂) is configured to:
select (S200, S300-S308, 308) one or more cooperating base stations (306a-c) for a coordinated multipoint communication for a mobile unit (302) serviced by the serving base station (300), and
determine (S204, S310, 316) whether the backhaul network supports a coordinated multipoint technique selected for a cooperating base station (306a-c).

## Amended claims

### Amended claims in accordance with Rule 137(2) EPC.

**1.** A method for coordinated multipoint communication in a wireless communication network comprising a plurality of base stations (BS, 300, 304, 306) and a backhaul network connecting the plurality of base stations (BS, 300, 304, 306), the method comprising:
selecting (S200, S300-S308, 308) one or more cooperating base stations (306a-c) for a coordinated multipoint communication for a mobile unit (UE, 302) serviced by a serving base station (300); and
determining (S204, S310, 316) whether the backhaul network supports a coordinated multipoint technique selected for a cooperating base station (306a-c); and
**characterized by**
in case the backhaul network is not sufficient to support a coordinated multipoint technique for one or more of the cooperating base stations (306a-c), reconfiguring (S208, S312, 318) the backhaul network to meet the requirements of the coordinated multipoint technique.

**2.** The method of claim 1, wherein reconfiguring (S208, S312, 318) the backhaul network comprises reconfiguring or activating network components according to the requirement of the coordinated multipoint technique, for example a physical X2 link, an optical tunneling link and a microwave point-to-point link between base stations..

**3.** The method of claim 1 or 2, comprising:
determining whether the reconfigured backhaul network supports the coordinated multipoint technique for the cooperating base stations (306a-c), and
starting (S314, 322-326c) the coordinated multipoint communication, when the reconfigured backhaul network supports the coordinated multipoint technique.

**4.** The method of one of claims 1 to 3, wherein determining whether the backhaul network supports a coordinated multipoint technique comprises determining whether the backhaul network provides sufficient network properties for a communication between the serving base station (300) and a selected cooperating base station (306a-c) in accordance with the selected coordinated multipoint technique.

**5.** The method of claim 4, wherein the network properties comprise a network capacity and a network latency.

**6.** The method of one of claims 1 to 5, wherein the selected coordinated multipoint technique comprises joint processing, coordinated scheduling, and coordinated beamforming.

**7.** The method of one of claims 1 to 6, wherein the serving base station (300) selects the coordinated multipoint technique for a cooperating base station based on the throughput demanded by the mobile unit (UE, 302) and based on the physical resource blocks available at a the cooperating base station (306a-c) for a communication between the cooperating base station (306a-c) and the mobile unit (UE, 302).

**8.** The method of claim 7, wherein a cooperating base station (306a-c) sends information about the available physical resource blocks for a communication between the cooperating base station and the mobile unit, and information about the backhaul network properties for a communication between the cooperating base station (306a-c) and the serving base station (300) via the backhaul network to the serving base station.

**9.** The method of one of claims 1 to 8, wherein selecting one or more cooperating base stations (306a-c) comprises:
determining by the mobile unit (302) a signal quality with respect to one or more neighboring base stations,
reporting (301) the signal quality to the serving base station (300), and
selecting by the serving base station (300) the cooperating base stations (306a-c) based on the signal quality.

**10.** The method of claim 9, wherein selecting comprises broadcasting (310a-c) a scheduling request via the backhaul network from the serving base station (300) to the one or more neighboring base stations (304).

**11.** A wireless communication system, comprising:
a plurality of base stations (BS, 300, 304, 306); and
a backhaul network connecting the plurality of base stations (BS, 300, 304, 306);
wherein a mobile unit (UE, 302) is serviced by a serving base station (300) of the plurality of base stations, and
wherein the system is configured to
select (S200, S300-S308, 308) one or more cooperating base stations (306a-c) for a coordinated multipoint communication for a mobile unit (302) serviced by the serving base station (300),
determine (S204, S310, 316) whether the backhaul network supports a coordinated multipoint technique selected for a cooperating base station (306a-c), and
cause (S208, S312, 318) a reconfiguration of the backhaul network to meet the requirements of the coordinated multipoint technique, in case the backhaul network is not sufficient to support a coordinated multipoint technique for one or more of the cooperating base stations (306a-c).

**12.** The wireless communication system of claim 11, wherein the serving base station (300) and/or a network controller (BSC₁, BSC₂) of the wireless communication system are configured to select the one or more cooperating base stations (306a-c), to determine whether the backhaul network supports a coordinated multipoint technique, and to cause the reconfiguration of the backhaul network.

**13.** A base station for a wireless communication system, the wireless communication system comprising a plurality of base stations (BS, 300, 304, 306) and a backhaul network connecting the plurality of base stations (BS, 300, 304, 306),
wherein the base station (300) is configured to service a mobile unit (302), and
wherein the base station (300) is configured to
select (S200, S300-S308, 308) one or more cooperating base stations (306a-c) for a coordinated multipoint communication for a mobile unit (302) serviced by the base station (300),
determine (S204, S310, 316) whether the backhaul network supports a coordinated multipoint technique selected for a cooperating base station (306a-c), and
cause (S208, S312, 318) a reconfiguration of the backhaul network to meet the requirements of the coordinated multipoint technique, in case the backhaul network is not sufficient to support a coordinated multipoint technique for one or more of the cooperating base stations (306a-c).

**14.** A network controller for a wireless communication system, the wireless communication system comprising a plurality of base stations (BS, 300, 304, 306) and a backhaul network connecting the plurality of base stations (BS, 300, 304, 306), wherein one of the base stations (300) is configured to service a mobile unit (302), and wherein a coordinated multipoint communication for the mobile unit using one or more cooperating base stations (306a-c) is to be implemented,
wherein the network controller (BSC₁, BSC₂) is configured to cause (S208, S312, 318) a reconfiguration of the backhaul network to meet the requirements of the coordinated multipoint technique, in case the backhaul network is not sufficient to support a coordinated multipoint technique selected for one or more of the cooperating base stations (306a-c).

**15.** The network controller of claim 14, wherein the serving base station (300) or the network controller (BSC₁, BSC₂) is configured to:
select (S200, S300-S308, 308) one or more cooperating base stations (306a-c) for a coordinated multipoint communication for a mobile unit (302) serviced by the serving base station (300), and
determine (S204, S310, 316) whether the backhaul network supports a coordinated multipoint technique selected for a cooperating base station (306a-c).
